# EUROPÄISCHE PATENTSCHRIFT

(11) **EP 3 381 265 B1**
(45) Veröffentlichungstag und Bekanntmachung des Hinweises auf die Patenterteilung: **24.03.2021**
(21) Anmeldenummer: 18165318.9
(22) Anmeldetag: 30.03.2018
(51) Int. Cl.: A01D 89/00, A01D 84/00, A01D 84/02

(54) **FÖRDEREINRICHTUNG FÜR GEMÄHTES HALMGUT**
CONVEYING DEVICE FOR MOWED STRAW
DISPOSITIF DE TRANSPORT POUR PAILLE FAUCHÉE

(30) Priorität: 01.04.2017 AT 502582017
(43) Veröffentlichungstag der Anmeldung: 03.10.2018
(73) Patentinhaber: Rahm, Andreas, 6277 Zellberg (AT)
(72) Erfinder: Rahm, Markus, 6277 Zellberg (AT)
(74) Vertreter: Schwarz & Partner Patentanwälte OG

(56) Entgegenhaltungen:
- EP-A1- 2 789 223
- EP-A1- 2 901 842
- EP-A1- 2 957 165
- CH-B1- 711 210
- DE-A1-102014 006 310
- GB-A- 2 215 971

## Beschreibung

Die Erfindung betrifft eine Fördereinrichtung für gemähtes Halmgut, wobei die Fördereinrichtung einen Zapfen aufweist, welcher mit einer Antriebswelle einer lenkbar geführten Arbeitsmaschine antriebsverbindbar ist, wobei die Fördereinrichtung eine Aufnahmevorrichtung mit an einem Rotor angeordneten Förderzinken zur Aufnahme des Halmguts von der Bodenoberfläche aufweist, wobei der Aufnahmevorrichtung eine Anströmfläche nachgeordnet ist, mit welcher das aufgenommene Halmgut seitlich der Fördereinrichtung zu einer Schwad zusammenfassbar ist.

### STAND DER TECHNIK UND HINTERGRUND ZUR ERFINDUNG

Eine gattungsgemäße Fördereinrichtung ist beispielsweise aus EP 2 901 842 A1 bekannt und wird auch als "Heuschieber" bezeichnet. Solche Fördereinrichtungen werden von landwirtschaftlichen Betrieben in Steilhängen eingesetzt, um geschnittenes Halmgut und in weiterer Folge Heu einfacher vom Steilhang transportieren zu können.

Eine ähnliche Fördereinrichtung wird in CH 711210 B1 offenbart, bei der eine Pickup-Vorrichtung, welche an einer landwirtschaftlichen Maschine angebracht wird, zumindest eine rotierbare bzw. pendelbare Pickup-Wlaze mit Förderzinken zur Aufnahme von Futter- bzw. Halmgut aufweist.
Des Weiteren wird in EP 2 789 223 A1 eine Vorrichtung zum Schwaden oder Transportieren von Gras oder Heu, umfassend eine Hebe- und Platziereinheit, offenbart. Die Vorrichtung ist dabei über einen Zapfen mit einer Fahreinheit verbindbar und die Hebe- und Platziereinheit lässt sich mithilfe einer Stelleinrichtung lotrecht aufstellen.

Meist werden solche Fördereinrichtungen mit einem Traktor, eine Mähvorrichtung oder dergleichen als Arbeitsmaschine verbunden. Die Fördereinrichtung dient dazu, dass gemähtes Halmgut auf einer landwirtschaftlichen Bodenoberfläche in die Form einer Schwade versetzt wird. Bei der Bildung dieser Schwade wird das Halmgut aus einer unregelmäßig verteilten Form in eine reihenförmig abgelegte Form umverteilt.

Die Schwadbildung erfolgt bei der Fördereinrichtung gemäß EP 2 901 842 A1 dadurch, dass die Anströmfläche eine Neigung relativ zur Aufnahmevorrichtung oder Ablenkbleche aufweist, wodurch das Halmgut talwärts gleitet und die Schwad bildet.

### KURZBESCHREIBUNG DER ERFINDUNG

Die Fördereinrichtungen nach Stand der Technik eignen sich gut für größere Halmgutmengen, haben allerdings den Nachteil, dass die Schwadbildung bei geringer Halmgutmenge unregelmäßig ist, d.h. die Menge an Halmgut in der reihenmäßig abglegten Form ist inhomogen.

Aufgabe der vorliegenden Erfindung ist daher die Bereitstellung einer Fördereinrichtung der eingangs genannten Gattung, welche sowohl mit größeren als auch mit kleineren Halmgutmengen so zurecht kommt, dass eine gleichmäßige Schwadbildung gewährleistet ist.

Gelöst wird diese Aufgabe durch eine Fördereinrichtung für gemähtes Halmgut, wobei die Fördereinrichtung einen Zapfen aufweist, welcher mit einer Antriebswelle einer lenkbar geführten Arbeitsmaschine antriebsverbindbar ist, wobei die Fördereinrichtung eine Aufnahmevorrichtung mit an einem Rotor angeordneten Förderzinken zur Aufnahme des Halmguts von der Bodenoberfläche aufweist, wobei der Aufnahmevorrichtung eine Anströmfläche nachgeordnet ist, mit welcher das aufgenommene Halmgut seitlich der Fördereinrichtung zu einer Schwad zusammenfassbar ist, welche dadurch gekennzeichnet ist, dass eine Stelleinrichtung vorgesehen ist, mit welcher der Winkel zwischen Zapfen und Aufnahmevorrichtung veränderbar ist und gleichzeitig auch eine Verdrehung der Förderzinken relativ zur Fahrtrichtung der Aufnahmevorrichtung verursacht wird.

Bei einer solchen Fördereinrichtung ist die Aufnahmevorrichtung relativ zum Zapfen und damit in weiterer Folge auch relativ zur Arbeitsmaschine verschwenkbar ausgebildet. Dies hat den Vorteil, dass die Neigung der Anströmfläche variierbar ist, sodass abhängig von der Halmgutmenge die seitlich transportierte Menge an Halmgut über den Winkel verstellbar ist. Außerdem hat es sich gezeigt, dass die Neigung der Aufnahmevorrichtung auch eine Verdrehung der Förderzinken relativ zur Fahrtrichtung der Aufnahmevorrichtung verursacht, wodurch es zu einer verbesserten, d.h. erhöhten, Aufnahmekapazität des Halmguts kommt. Auch bei sehr wenig Halmgut ist durch eine Verschwenkung der Fördereinrichtung eine Schwadbildung möglich, da das Halmgut kontinuierlich an der Seite der Fördereinrichtung abgelegt wird, wobei das Halmgut nicht auf die Anströmfläche gehoben wird. Es ist daher bevorzugt vorgesehen, dass der Winkel zwischen Aufnahmevorrichtung und Anströmfläche gemeinsam über die Stelleinrichtung relativ zum Zapfen verstellbar ist. Anders ausgedrückt wird über die Stelleinrichtung die Aufnahmevorrichtung und die Anströmfläche relativ zum Zapfen bzw. zur Achse des Zapfens verschwenkt. Gleichzeitig bleibt aber die Fahrtrichtung der Aufnahmevorrichtung konstant. Dies wird dadurch erreicht, dass allfällige Gleitmittel (wie z.B. allenfalls vorhandene Räder oder Gleitflächen) ihre Ausrichtung bei Betätigung der Stelleinrichtung konstant bzw. unverändert halten.

Der Zapfen ist mit der Antriebswelle einer lenkbar geführten Arbeitsmaschine antriebsverbindbar. Als Arbeitsmaschine kommen bevorzugt eine Mähmaschine oder z.B. ein Traktor in Frage. In weiterer Folge ist der Zapfen über ein Gleichlaufgelenk mit dem Rotor der Aufnahmevorrichtung verbunden, sodass der Rotor in Rotation versetzbar ist. Durch die Rotation des Rotors werden die in radialer Richtung abstehenden Förderzinken in Rotation versetzt.

Die Aufnahmevorrichtung weist Ausnehmungen auf, durch welche die Förderzinken im Zuge der Rotation aus der Aufnahmevorrichtung heraustreten und später wieder eintreten können. Beim Heraustreten tauchen die Förderzinken im Bereich der Aufnahme des Halmguts in das Halmgut ein und ziehen es bei der Weiterrotation auf die Aufnahmevorrichtung auf. Dort erfolgt der Transport zur Anströmfläche, wo das Halmgut auf die Seite geschoben und von der Aufnahmevorrichtung wieder auf die Seite der Fördereinrichtung abgegeben wird, sodass es zur Schwadbildung neben der Fördereinrichtung kommt.

In einer bevorzugten Ausführungsvariante ist vorgesehen, dass die Stelleinrichtung der Fördereinrichtung eine Kolben-Zylindereinheit aufweist. Weiters kann ein Drehgelenk zwischen Zapfen und Aufnahmevorrichtung vorgesehen sein. Über die Kolben-Zylindereinheit in Kombination mit dem Drehgelenk kann die Schwenkbewegung durch Relativbewegung von Kolben zu Zylinder ausgelöst werden, wenn der Kolben auf einer Seite von Zapfen oder Aufnahmevorrichtung und der Zylinder auf der anderen Seite von Zapfen oder Aufnahmevorrichtung angelenkt ist.

In einer Ausführungsvariante kann vorgesehen sein, dass die Anströmfläche im Wesentlichen transparent ausgebildet ist. Die Anströmfläche ist in der Regel ein gekrümmtes Blech, welches im Wesentlichen parallel zum Rotor angeordnet ist und gegebenenfalls eine Krümmung im oberen Bereich aufweist, damit das Heugut nicht auf die Arbeitsmaschine gelangen kann. Ist das Blech transparent ausgebildet, bietet sich an, dieses aus Polymethylmethacrylat (PMMA) oder Polycarbonat (PC) auszubilden. Dies hat den Vorteil, dass der Benutzer einen besseren Blick auf die Aufnahmevorrichtung hat und Verstopfungen oder unerwünschte Teile im Halmgut erkennen kann.

Die Förderzinken der Aufnahmevorrichtung stehen vom Rotor in radialer Richtung ab. Bevorzugt stehen sie so ab, dass sie im Bereich der Aufnahme des Halmguts geneigt sind und vorzugsweise einen stumpfen Winkel (betrachtet in Bewegungsrichtung der Fördereinrichtung) mit der Oberfläche der Aufnahmevorrichtung einschließen. Die Förderzinken können außerdem einen zusätzlichen Knick aufweisen, sodass der Winkel radial nach außen betrachtet zunimmt, da dadurch ein Verstopfen im Rotorbereich durch Halmgut beim Eintauchen der Förderzinken verhindert wird. Die Förderzinken können also gekröpft sein.

Bevorzugt ist vorgesehen, dass die Aufnahmevorrichtung im Bereich der Aufnahme des Halmguts von der Bodenoberfläche einen Abschnitt mit im Wesentlichen kreisförmigen Querschnitt aufweist. Dies kann z.B. durch Abstreifbleche mit abschnittsweise kreisförmigen Querschnitt erzielt werden.

Weiters kann vorgesehen sein, dass an den Abschnitt mit im Wesentlichen kreisförmigen Querschnitt eine Kröpfung anschließt. Dadurch wird das Halmgut abgestreift, ohne dass es zu einem Verstopfen kommt. Sind Abstreifbleche vorhanden, weisen diese abschnittsweise einen kreisförmigen Querschnitt und anschließend eine Kröpfung auf.

Weitere Details und Vorteile der Erfindung sind anhand der nachfolgenden Figuren und Figurenbeschreibungen erörtert.
- Fig. 1a bis le zeigen: eine Ausführungsform der Fördereinrichtung in Schnittdarstellung (Fig. 1a) und von vorne, einmal vor Betätigung der Stellvorrichtung (Fig. 1b) und einmal nach Betätigung der Stellvorrichtung (Fig. lc). Fig. 1d zeigt eine Detailansicht der Aufnahmevorrichtung im Schnitt von vorne. Fig. le und 1 f zeigen die Fördereinrichtung jeweils von der Seite.
- Fig. 2a und 2b zeigen: Detailansichten der Aufnahmevorrichtung im Schnitt (Fig. 2a) und von der Seite (Fig. 2b).
- Fig. 3a und 3b zeigen: eine Ansicht im Querschnitt der Aufnahmevorrichtung im Bereich der Ausnehmungen für die Förderzinken (Fig. 3a) und eine Ausnehmung für einen Förderzinken von vorne (Fig. 3b).
- Fig. 4a und 4b zeigen: Eine Ausführungsform der Erfindung im Schnitt (Fig. 4a) und in Seitenansicht (Fig. 4b).

Die Fig. la bis le zeigen eine erste Ausführungsform der Fördereinrichtung 1 für gemähtes Halmgut. Die Fördereinrichtung 1 weist einen Zapfen 10 auf, welcher mit einer Antriebswelle einer nicht dargestellten, lenkbar geführten Arbeitsmaschine (z.B. Mähmaschine, Traktor oder dergleichen) antriebsverbindbar ist. Die Fördereinrichtung 1 weist weiters eine Aufnahmevorrichtung 12 mit an einem Rotor 14 angeordneten Förderzinken 16 zur Aufnahme und zur Aufnahme des Halmguts von der Bodenoberfläche auf.

Der Aufnahmevorrichtung 12 ist eine Anströmfläche 20 nachgeordnet, mit welcher das aufgenommene Halmgut seitlich der Fördereinrichtung 1 zu einer Schwad zusammenfassbar ist. Weiters ist eine Stelleinrichtung 30 vorgesehen ist, mit welcher der Winkel α zwischen Zapfen 10 und Aufnahmevorrichtung 12 veränderbar ist.

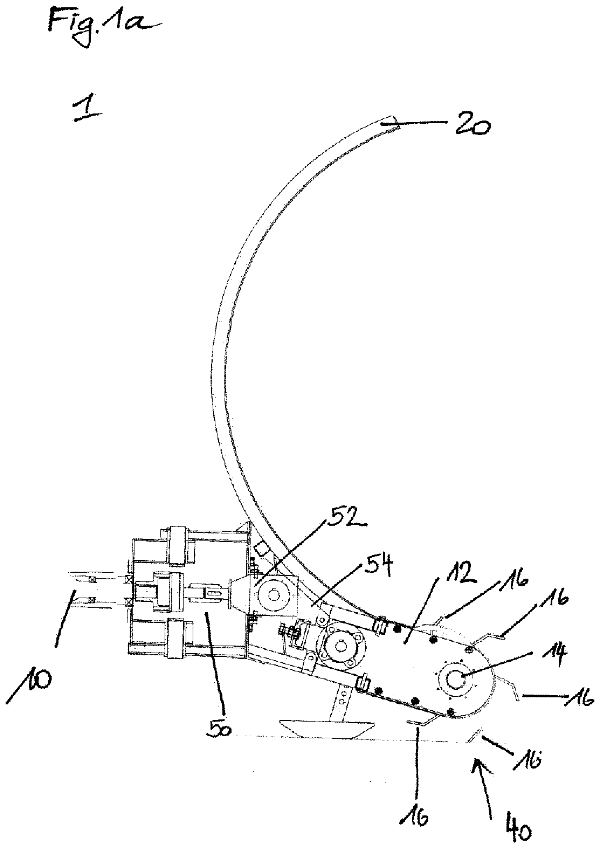

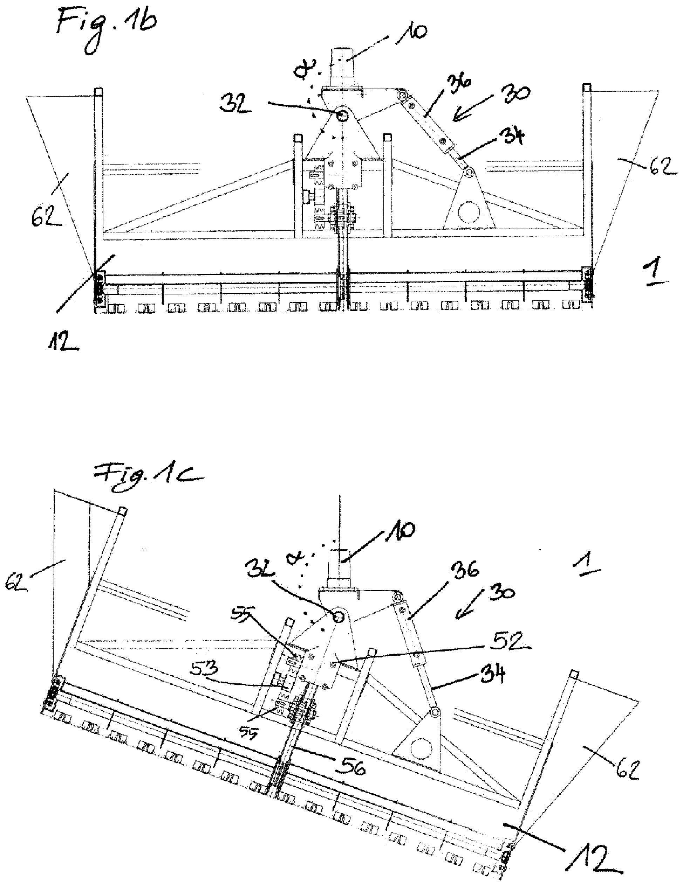

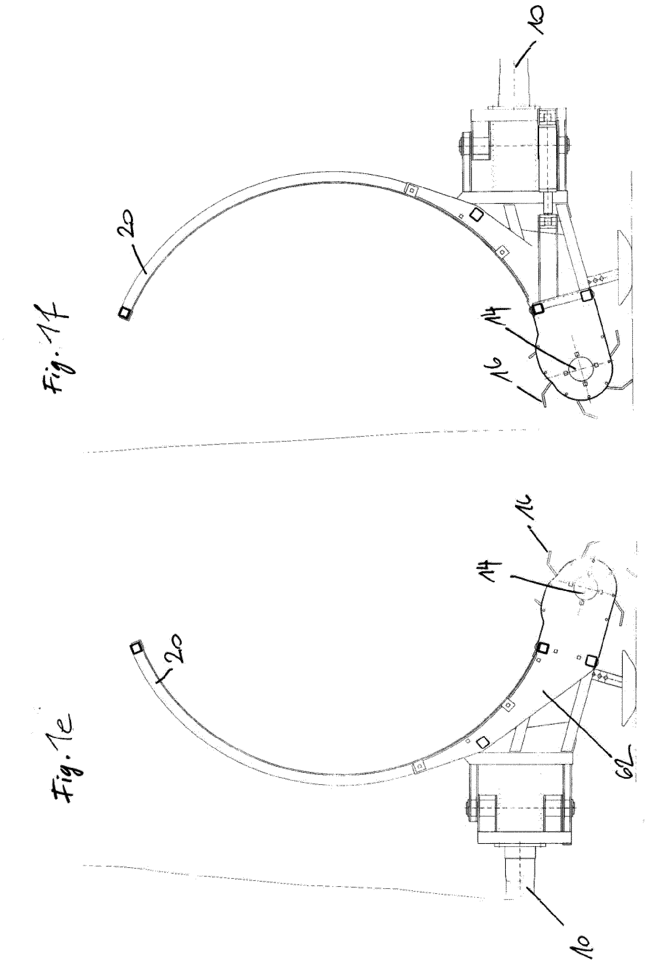

Bei der Fördereinrichtung 1 ist die Aufnahmevorrichtung 12 relativ zum Zapfen 10 verschwenkbar ausgebildet, wenn die Stelleinrichtung 30 betätigt wird (siehe Fig. 1b und 1c). Die Neigung der Anströmfläche in Fahrtrichtung der Fördereinrichtung ist dadurch variierbar. Der Winkel zwischen Aufnahmevorrichtung und Anströmfläche wird gemeinsam über die Stelleinrichtung 30 relativ zum Zapfen 10 verstellt.

Der Zapfen 10 ist über ein Gleichlaufgelenk 50 mit dem Rotor 14 der Aufnahmevorrichtung 12 verbunden, sodass der Rotor 12 in Rotation versetzbar ist. Zwischen Gleichlaufgelenk 50 und Rotor 12 ist noch ein Winkelgetriebe 52 zwischengeschalten, das über einen Keilriemen 54 und eine Rollenkette 56 mit dem Rotor 12 verbunden ist. Durch die Rotation des Rotors 12 werden die in radialer Richtung abstehenden Förderzinken 16 in Rotation (im Gegenuhrzeigersinn) versetzt. Ein Keilriemen 54, dessen Spannung über einen Keilriemenspanner 53 einstellbar ist, verläuft über die Keilriemenscheiben 55, die in weiterer Folge die Rollenkette 56 antreiben, welche wiederum die Förderzinken 16 in Rotation versetzt.

Die Stelleinrichtung der Fördereinrichtung 1 weist eine Kolben-Zylindereinheit 30 auf. Weiters ist ein Drehgelenk 32 zwischen Zapfen 10 und Aufnahmevorrichtung 12 vorgesehen. Über die Kolben-Zylindereinheit 30 in Kombination mit dem Drehgelenk 32 kann die Schwenkbewegung durch Relativbewegung von Kolben 34 zu Zylinder 36 ausgelöst werden, wenn der Kolben auf einer Seite von Zapfen oder Aufnahmevorrichtung und der Zylinder auf der anderen Seite von Zapfen oder Aufnahmevorrichtung angelenkt ist.

Die Anströmfläche 20 ist im Wesentlichen transparent ausgebildet. Die Anströmfläche 20 ist ein gekrümmtes Blech, welches im Wesentlichen parallel zum Rotor 14 angeordnet ist und gegebenenfalls eine Krümmung im oberen Bereich aufweist, damit das Heugut nicht auf die Arbeitsmaschine gelangen kann. Die Anströmfläche 20 kann aus Polymethylmethacrylat (PMMA) oder Polycarbonat (PC) ausgebildet sein. Seitliche Leitbleche 62 können zur besseren Ablage des Halmguts vorgesehen sein.

Die Förderzinken 16 der Aufnahmevorrichtung 12 stehen vom Rotor 14 in radialer Richtung ab. Bevorzugt stehen sie so ab, dass sie im Bereich 40 der Aufnahme des Halmguts geneigt sind und vorzugsweise einen stumpfen Winkel (betrachtet in Bewegungsrichtung der Fördereinrichtung 1) mit der Oberfläche der Aufnahmevorrichtung 12 einschließen. Die Förderzinken 16 weisen außerdem einen zusätzlichen Knick auf, sodass der Winkel radial nach außen betrachtet zunimmt. Die Förderzinken 16 sind also gekröpft.

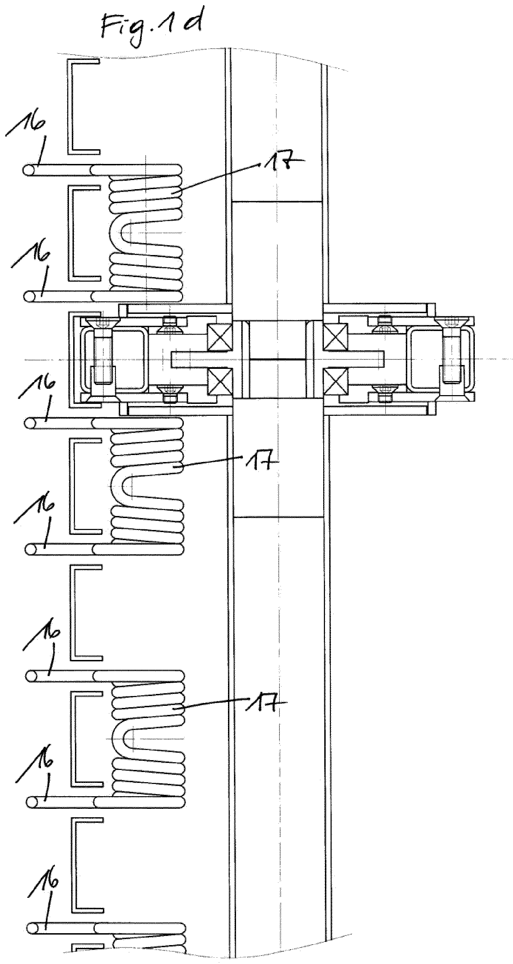

In der Detailansicht Fig. 1d ist eine Ansicht auf die Förderzinken 16 von vorne gezeigt.

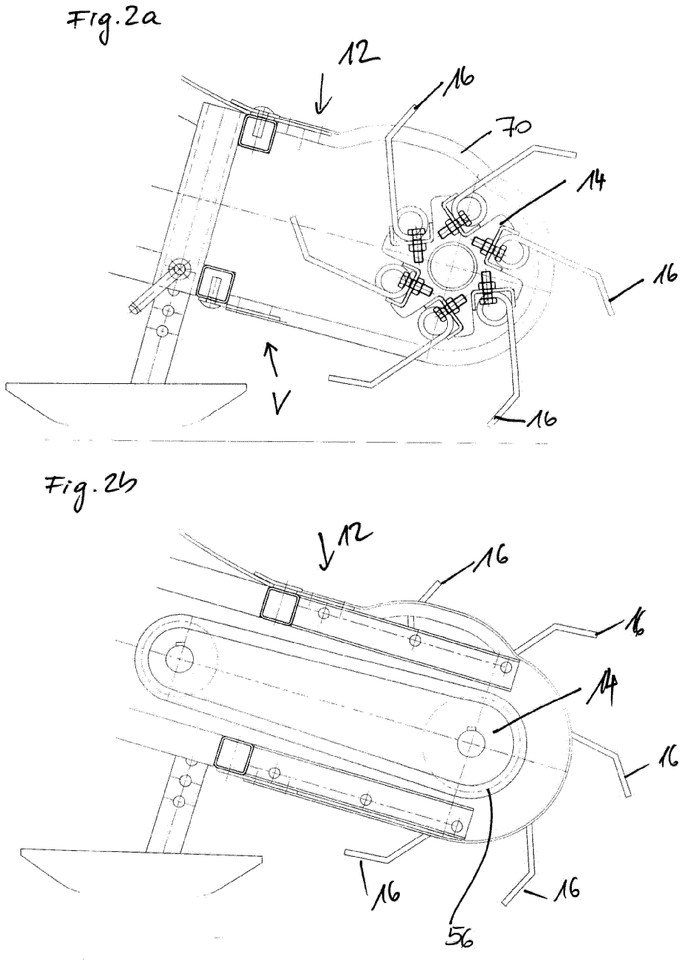

In Fig. 2a und 2b sind die Förderzinken 16, die am Rotor 14 der Aufnahmevorrichtung 12 mittels Schraubverbindungen befestigt sind, im Detail dargestellt. Die Förderzinken 16 rotieren im Gegenuhrzeigersinn und tauchen dabei in die Aufnahmevorrichtung 12 an der Oberseite ein und treten an der Unterseite wieder aus der Aufnahmevorrichtung 12 heraus. Der Rotor 14 wird über die Rollenkette 56 in Rotation versetzt.

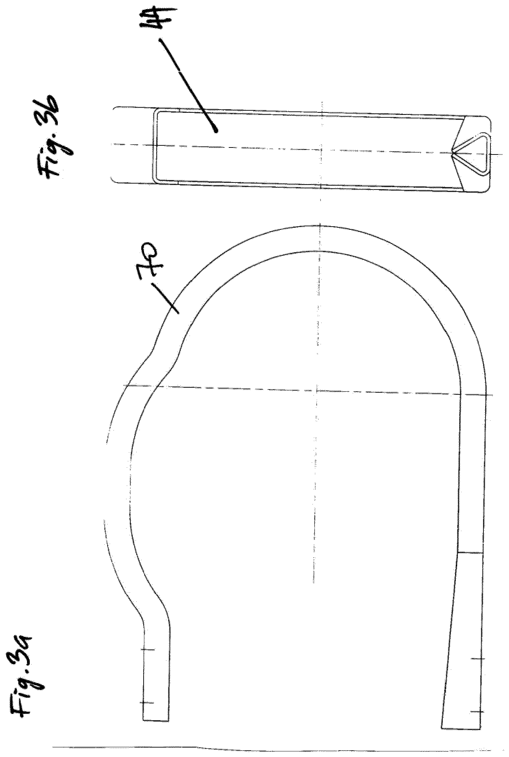

Die Aufnahmevorrichtung 12 weist Ausnehmungen 44 (Fig. 3b) auf, durch welche die Förderzinken 16 im Zuge der Rotation aus der Aufnahmevorrichtung 12 (Querschnitt Fig. 3a) heraustreten und später wieder eintreten können. Dies wird durch mehrere nebeneinander angeordnete Abstreifbleche 70 bewirkt. Die Förderzinken 16 treten am Austrittsbereich V aus der Aufnahmevorrichtung 12 heraus, greifen dann im Bereich der Aufnahme 40 des Halmguts in das Halmgut ein und ziehen es bei der Weiterrotation auf die Aufnahmevorrichtung 12 auf. Dort erfolgt der Transport zur Anströmfläche 20, von wo das Halmgut auf die Seite geschoben wird und von der Aufnahmevorrichtung 12 wieder auf die Seite abgegeben wird, sodass es zur Schwadbildung kommt. Der Austrittsbereich V weist eine Verjüngung auf.

Fig. 3a und 3b zeigen ein Abstreifblech 70 von der Seite (Fig. 3a) und von hinten (Fig. 3b).

Die Krümmung an der Oberseite des Abstreifblechs 70 ist so ausgebildet, dass beim Eintauchen des Förderzinkens 16 immer ein stumpfer Winkel zwischen Förderzinken 16 und Abstreifblech 70 bleibt, um so ein Abstreifen des Halmgutes zu gewährleisten. Bei einem spitzen Winkel würde das Halmgut zur Verstopfung führen. An der linken unteren Seite der Fig. 3a ist erkennbar, dass das Abstreifblech 70 nach innen zu einer Dreieckform verjüngt ist (siehe auch Fig. 3b). Dadurch kann auch ein verbogener Zinken aus der Aufnahmevorrichtung 12 austreten, ohne diese zu beschädigen. Auch ein Verstopfen durch verbogene Förderzinken 16 oder mitgenommenen Halmgut wird dadurch verhindert. Die Abstreifbleche 70 sind nebeneinander angeordnet. Dazwischen rotieren die Förderzinken 16.

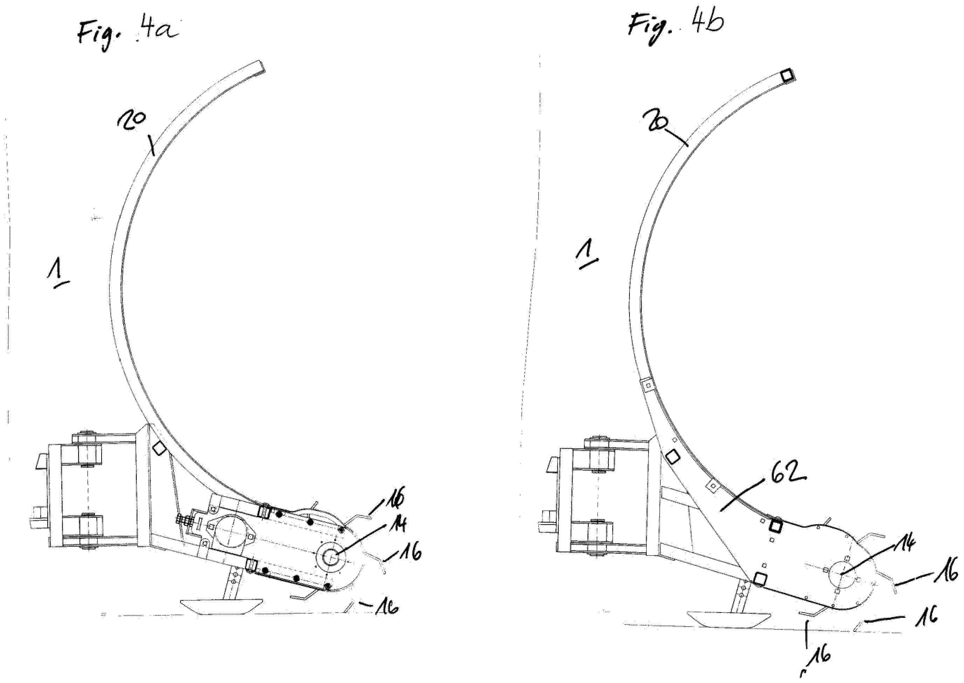

Die Fig. 4a und 4b zeigen Ausführungsvarianten der Erfindung. Dabei besteht zur vorherigen Ausführungsvariante der Unterschied, dass der Antrieb des Rotors 14 über einen Hydraulikmotor erfolgt.

## Patentansprüche

1. Fördereinrichtung (1) für gemähtes Halmgut, wobei die Fördereinrichtung (1) einen Zapfen (10) aufweist, welcher mit einer Antriebswelle einer lenkbar geführten Arbeitsmaschine antriebsverbindbar ist, wobei die Fördereinrichtung (1) eine Aufnahmevorrichtung (12) mit an einem Rotor (14) angeordneten Förderzinken (16) zur Aufnahme des Halmguts von der Bodenoberfläche aufweist, wobei der Aufnahmevorrichtung (12) eine Anströmfläche (20) nachgeordnet ist, mit welcher das aufgenommene Halmgut seitlich der Fördereinrichtung (12) zu einer Schwad zusammenfassbar ist, **dadurch gekennzeichnet, dass** eine Stelleinrichtung (30) vorgesehen ist, mit welcher der Winkel (a) zwischen Zapfen (10) und Aufnahmevorrichtung (12) veränderbar ist und gleichzeitig auch eine Verdrehung der Förderzinken (16) relativ zur Fahrtrichtung der Aufnahmevorrichtung (12) verursacht wird.

2. Fördereinrichtung (1) nach Anspruch 1, **dadurch gekennzeichnet, dass** die Stelleinrichtung (30) eine Kolben-Zylindereinheit aufweist.

3. Fördereinrichtung (1) nach Anspruch 1 oder Anspruch 2, **dadurch gekennzeichnet, dass** die Anströmfläche (20) im Wesentlichen transparent ausgebildet ist.

4. Fördereinrichtung nach einem der Ansprüche 1 bis 3, **dadurch gekennzeichnet, dass** die Förderzinken (16) der Aufnahmevorrichtung (6) vom Rotor in radialer Richtung abstehen - vorzugsweise schließen sie einen stumpfen Winkel mit der Oberfläche der Aufnahmevorrichtung (12) ein.

5. Fördereinrichtung nach Anspruch 4, **dadurch gekennzeichnet, dass** die Förderzinken (16) am radialen Ende einen Knick aufweisen.

6. Fördereinrichtung nach einem der Ansprüche 1 bis 5, **dadurch gekennzeichnet, dass** die Aufnahmevorrichtung (12) im Bereich (40) der Aufnahme des Halmguts von der Bodenoberfläche einen Abschnitt mit im Wesentlichen kreisförmigen Querschnitt aufweist.

7. Fördereinrichtung nach Anspruch 6, **dadurch gekennzeichnet, dass** an den Abschnitt mit im Wesentlichen kreisförmigen Querschnitt eine Kröpfung anschließt.

8. Fördereinrichtung nach einem der Ansprüche 1 bis 7, **dadurch gekennzeichnet, dass** der Antrieb des Rotors (14) über einen Hydraulikmotor erfolgt.

## Claims

1. A conveying device (1) for mowed straw, wherein the conveying device (1) has a pin (10), which may be connected for driving to a drive shaft of a work machine steerably moved, wherein the conveying device (1) has collecting device (12) having conveying forks (16) arranged at a rotor (14) for collecting the straw from the ground surface, wherein downstream of the collecting device (12) an impingement surface (20) is arranged, by means of which the collected straw may be joined laterally to the conveying device (12) into a swathe, **characterized in that** there is provided a regulating device (30), by means of which the angle (a) between the pin (10) and the collecting device (12) may be changed and, simultaneously, there is caused a rotation of the conveying forks (16) in regard to the travel direction of the collecting device (12).

2. A conveying device (1) according to claim 1, **characterized in that** the regulating device (30) has a piston-cylinder unit.

3. A conveying device (1) according to claim 1 or claim 2, **characterized in that** the impingement surface (20) is realized substantially transparent.

4. A conveying device according to any of the claims 1 to 3, **characterized in that** the conveying forks (16) of the collecting device (6) protrude from the rotor in the radial direction - preferably enclosing an obtuse angle with the surface of the collecting device (12).

5. A conveying device according to claim 4, **characterized in that** the conveying forks (16) have a bend at the radial end.

6. A conveying device according to any of the claims 1 to 5, **characterized in that** the collecting device (12) has a portion of a substantially circular cross-section in the region (40) of the collection of the straw from the ground surface.

7. A conveying device according to claim 6, **characterized in that** a crank follows the portion having a substantially circular cross-section.

8. A conveying device according to any of the claims 1 to 7, **characterized in that** driving the rotor (14) is realized via a hydraulic motor.

## Revendications

1. Dispositif de transport (1) pour paille fauchée, le dispositif de transport (1) comprenant un tourillon (10) qui peut être relié en entraînement à un arbre d'entraînement d'une machine de travail guidée de manière orientable, le dispositif de transport (1) comprenant un dispositif de réception (12) qui comporte des dents de transport (16) disposées sur un rotor (14) et qui est destiné à recevoir la paille à partir de surface du sol, une surface d'entrée (20) étant disposée en aval du dispositif de réception (12), surface d'entrée au moyen de laquelle la paille reçue peut être réunie latéralement par rapport au dispositif de transport (12) dans le but de former un andain, **caractérisé en ce qu'**il est prévu un dispositif de réglage (30) au moyen duquel il est possible de modifier l'angle (α) entre le tourillon (10) et le dispositif de transport (12), et une rotation des dents de transport (16) par rapport au sens de déplacement du dispositif de réception (12) est également provoquée de façon simultanée.

2. Dispositif de transport (1) selon la revendication 1, **caractérisé en ce que** le dispositif de réglage (30) comprend une unité de piston - cylindre.

3. Dispositif de transport (1) selon la revendication 1 ou la revendication 2, **caractérisé en ce que** la surface d'entrée (20) est sensiblement transparente.

4. Dispositif de transport selon l'une quelconque des revendications 1 à 3, **caractérisé en ce que** les dents de transport (16) du dispositif de réception (6) dépassent du rotor dans la direction radiale, formant de préférence un angle obtus avec la surface du dispositif de réception (12).

5. Dispositif de transport selon la revendication 4, **caractérisé en ce que** les dents de transport (16) présentent une courbure qui est formée au niveau de l'extrémité radiale.

6. Dispositif de transport selon l'une quelconque des revendications 1 à 5, **caractérisé en ce que** le dispositif de réception (12) présente, dans la zone (40) de réception de la paille depuis la surface du sol, un segment dont une section transversale est sensiblement circulaire.

7. Dispositif de transport selon la revendication 6, **caractérisé en ce qu'**un coude est relié au segment qui présente une section transversale sensiblement circulaire.

8. Dispositif de transport selon l'une quelconque des revendications 1 à 7, **caractérisé en ce que** l'entraînement du rotor (14) s'effectue par l'intermédiaire d'un moteur hydraulique.
